# EUROPÄISCHE PATENTSCHRIFT

(11) **EP 2 508 308 B1**
(45) Veröffentlichungstag und Bekanntmachung des Hinweises auf die Patenterteilung: **26.08.2015**
(21) Anmeldenummer: 12161840.9
(22) Anmeldetag: 28.03.2012
(51) Int. Cl.: B25J 19/00

(54) **Verfahren und Handhabungssystem zum automatisierten Bewegen eines schwerkraftkompensierten Lastkörpers**
Method and handling system for automated movement of a gravity-compensated load
Procédé et système de manipulation pour le déplacement automatisé d'un corps de charge à compensation de gravité

(30) Priorität: 07.04.2011 DE 102011006992
(43) Veröffentlichungstag der Anmeldung: 10.10.2012
(73) Patentinhaber: KUKA Roboter GmbH, 86165 Augsburg (DE)
(72) Erfinder: Brudniok, Sven, 86157 Augsburg (DE); Schreiber, Günter, 86316 Friedberg (DE); Maischberger, Johann, 86424 Dinkelscherben (DE)
(74) Vertreter: Patentanwälte Funk & Böss GbR

(56) Entgegenhaltungen:
- CN-A- 101 913 153
- JP-A- 5 123 993
- JP-A- 2000 271 887

## Beschreibung

Die Erfindung betrifft ein automatisiertes Handhabungssystem, aufweisend eine Schwerkraft-Kompensationsvorrichtung für einen Lastkörper.

Die DE 10 2008 032 322 A1 offenbart ein Verfahren zum Montieren zweier Bauteile mittels eines Leichtbauroboters, bei dem zunächst ein erstes Bauteil mittels des Roboters aufgenommen und anschließend mit zumindest einem Teilbereich in eine Ausnehmung eines zweiten Bauteils eingeführt wird, wobei es bereits frühzeitig zum Kontakt zwischen den Bauteilen kommt. Während der Einführbewegung wird dabei das erste Bauteil durch den Leichtbauroboter zumindest zeitweise oszillierend bewegt. Unter Leichtbauroboter wird dabei ein Roboter verstanden, der im Vergleich zu seiner Lastaufnahmefähigkeit ein geringes Eigengewicht und eine präzise Kraftsteuerung aufweist. Durch das geringe Eigengewicht und die präzise Steuerung ist es möglich, Bauteile auch frühzeitig bei ihrer gegenseitigen Montage in Kontakt miteinander zu bringen, ohne dass Beschädigungen der Bauteile daraus resultieren.

Aus der US 2011/0048649 A1 ist eine automatisierte Reifen-Montagevorrichtung bekannt, bei der ein Radmuttern-Schraubwerkzeug durch eine Schwerkraft-Kompensationsvorrichtung, welche unmittelbar mit dem Radmuttern-Schraubwerkzeug verbunden ist, in der Schwebe gehalten wird, wobei ein separater Industrieroboter mit einem Greifwerkzeug versehen ist, welches das in der Schwebe befindliche Radmuttern-Schraubwerkzeug zum automatisierten Bewegen greift.

Die CN 101 913 153 A zeigt ein Automatisiertes Handhabungssystem gemäß dem Oberbegriff des Anspruch 1; aufweisend eine Schwerkraft-Kompensationsvorrichtung für einen Lastkörper, die lastseitig mit einem Anschlussglied versehen ist, ein Lastkörperhaltemittel und einen Roboter zum automatisierten Bewegen des schwerkraftkompensierten Lastkörpers, welcher Roboter einen Endeffektor-Flansch aufweist.

Aufgabe der Erfindung ist es, ein alternatives, insbesondere verbessertes Handhabungssystem zum automatisierten Bewegen eines schwerkraftkompensierten Lastkörpers anzugeben.

Die Aufgabe wird gelöst durch ein Automatisiertes Handhabungssystem gemäß Anspruch 1.

Bei einem Verfahren zum automatisierten Bewegen eines schwerkraftkompensierten Lastkörpers hängt der Lastkörper nicht unmittelbar an der Schwerkraft-Kompensationsvorrichtung, sondern der Lastkörper ist an einem Lastkörperhaltemittel befestigt, das mit dem Endeffektor-Flansch des Roboters verbunden ist, wobei die Schwerkraft-Kompensationsvorrichtung dann am Roboter, insbesondere am Endeffektor-Flansch des Roboters angreift und nicht am Lastkörper bzw. dem Lastkörperhaltemittel direkt. Der Roboter kann einen Manipulatorarm und eine Steuervorrichtung umfassen. Die Steuervorrichtung kann eingerichtet sein, den Manipulatorarm automatisiert zu bewegen. Der Lastkörper kann beispielsweise ein Bauteil sein, das im Zuge eines Montagevorgangs zu positionieren bzw. zu montieren ist. Das Lastkörperhaltemittel kann ein Endeffektor des Roboters sein. Das Lastkörperhaltemittel kann insbesondere ein Greifer sein, der am Endeffektor-Flansch des Roboters befestigt, unlösbar verbunden, d.h. angeflanscht ist.

Bei einem solchen Verfahren wird der Lastkörper überwiegend, insbesondere zumindest weitgehend oder vollständig h die Schwerkraft-Kompensationsvorrichtung getragen, indem die Schwerkraft-Kompensationsvorrichtung eine der Schwerkraft entgegengesetzte Kraft über den Endeffektor-Flansch des Roboters auf den Lastkörper einleitet. Ergänzend können auch Kräfte übertragen werden, die einen Anteil haben, der nicht der Schwerkraft entgegengerichtet ist. Die Kraft ist im Allgemeinen vom Flansch des Roboters zur Schwerkraft-Kompensationsvorrichtung gerichtet. Somit kann ein Lastkörper durch den Roboterarm bewegt werden, der eine höhere, insbesondere weit höhere Masse aufweist, als aufgrund der Tragfähigkeit des Roboters durch den Roboterarm alleine gehalten werden könnte. Der Roboter dient zumindest weitgehend oder vollständig lediglich zum Manövrieren des Lastkörpers im Raum, ohne dass der Roboter zum vollständigen Tragen des Lastkörpers ausgebildet bzw. eingerichtet sein muss.

Ist die Schwerkraft-Kompensationsvorrichtung an ein anderes Glied des Roboters angekoppelt, als an dasjenige Glied an welchem das Lastkörperhaltemittel befestigt ist, so ist sicherzustellen, dass die zwischen dem Anschlussglied der Schwerkraft-Kompensationsvorrichtung und dem Lastkörperhaltemittel liegenden Glieder und/oder Gelenke des Roboters die aufgrund der Masse des Lastkörpers und der Schwerkraft auftretenden Tragkräfte und/oder von Trägheitskräften übertragen können. Im einfachsten Falle ist die Schwerkraft-Kompensationsvorrichtung jedoch unmittelbar an den Endeffektor-Flansch des Roboters anzukoppeln, an dem das Lastkörperhaltemittel unmittel angeflanscht ist, so dass keine Glieder und/oder Gelenke des Roboters dazwischen liegen.

In allen Ausführungsformen kann die Schwerkraft-Kompensationsvorrichtung allein aufgrund einer aktiven Bewegung des Roboters und/oder des Lastkörpers passiv, insbesondere eigenantriebslos mitbewegt werden. Die Schwerkraft-Kompensationsvorrichtung muss somit nicht über eigene Antriebe verfügen, sondern kann als eine überwiegend oder ausschließlich mechanische Gelenkanordnung ausgebildet sein. Inn einer beispielhaften Ausführung kann die Schwerkraft-Kompensationsvorrichtung von einem mechanischen Gelenkausleger mit zwei Freiheitsgraden gebildet werden, dessen Auslegerende innerhalb einer horizontalen Ebene frei verstellt werden kann. Der Lastkörper kann dabei beispielsweise an einem kranartigen Hebeseil hängen, welches von dem Auslegerende des mechanischen Gelenkausleger nach unten abläuft. Der Lastkörper hängt insoweit "frei schwebend", d.h. nur durch das Seil getragen in der Luft. Das Seil kann an eine Vorrichtung angeschlossen sein, welches eine Zugkraft auf das Seil ausübt, welche zumindest annähernd der Schwerkraft des Lastkörpers entspricht.

In einer Ausführungsform kann die Schwerkraft-Kompensationsvorrichtung ausschließlich die durch die Masse des Lastkörpers bewirkte Schwerkraft kompensieren. In diesem Fall muss vom Roboter weiterhin eine gewisse Tragkraft aufgewandt werden, nämlich beispielsweise zum Heben des Lastkörperhaltemittels und/oder des Endeffektor-Flansches und/oder aufgrund der zusätzlichen Momente, die sich ergeben, wenn der Lastkörper um die horizontalen Achsen gekippt wird. Die Kraft muss nicht notweniger Weise durch den Schwerpunkt des Lastkörpers gehen. Weiterhin können oder müssen auch dynamische Kräfte zumindest teilweise oder vollständig aufgenommen werden.

In einer alternativen Ausführungsform kann die Schwerkraft-Kompensationsvorrichtung neben der durch die Masse des Lastkörpers bewirkte Schwerkraft zusätzlich eine durch die Masse des Lastkörperhaltemittels und/oder durch die Masse des Endeffektor-Flansches und/oder eines oder mehrerer der Glieder des Roboters bewirkte Schwerkraft kompensieren. So kann der Roboterarm auch von den Gewichtskräften aus den Massen des Lastkörperhaltemittels und/oder einzelner Glieder, insbesondere des Endeffektor-Flansches durch die Schwerkraft-Kompensationsvorrichtung entlastet werden.

Bei dem erfindungsgemäßen automatisierten Handhabungssystem hängt der Lastkörper somit nicht unmittelbar an der Schwerkraft-Kompensationsvorrichtung, sondern der Lastkörper ist an einem Lastkörperhaltemittel befestigt, das mit dem Endeffektor-Flansch des Roboters verbunden ist, wobei die Schwerkraft-Kompensationsvorrichtung dann über eine Gelenkkoppel am Roboter, insbesondere am Endeffektor-Flansch des Roboters angreift und nicht am Lastkörper bzw. dem Lastkörperhaltemittel direkt. Der Roboter kann einen Manipulatorarm und eine Steuervorrichtung umfassen. Die Steuervorrichtung kann eingerichtet sein, den Manipulatorarm automatisiert zu bewegen. Der Lastkörper kann beispielsweise ein Bauteil sein, das im Zuge eines Montagevorgangs zu positionieren bzw. zu montieren ist. Das Lastkörperhaltemittel kann ein Endeffektor des Roboters sein. Das Lastkörperhaltemittel kann insbesondere ein Greifer sein, der am Endeffektor-Flansch des Roboters befestigt, unlösbar verbunden, d.h. angeflanscht ist.

Der Endeffektor-Flansch stellt ein spezielles Glied des Roboters dar. Ist der Endeffektor-Flansch am letzten Gelenk des Roboterarms drehbar gelagert, so kann das Verbindungsglied über ein Wälzlager oder Gleitlager drehbar an dem Endeffektor-Flansch gelagert sein.

Die Gelenkkoppel weist ein bügelförmiges Halteglied auf. Das bügelförmiges Halteglied kann sich entlang einer Kreisbahn um einen Winkel von etwa 270 Grad erstrecken. Der Radius dieser Kreisbahn kann derart groß gewählt sein, dass ein dem Endeffektor-Flansch nahes Glied vollständig in einen von dem bügelförmigen Halteglied umfangenen Freiraum eintauchen kann. In einem Bereich des oberen Endes kann das bügelförmige Halteglied eine nach innen weisende Kerbe aufweisen, an welcher ein ringförmig ausgebildetes Anschlussglied der Schwerkraft-Kompensationsvorrichtung eingreift. Entweder kann das Anschlussglied mittels einer Drehgelenkverbindung mit dem Seil verbunden sein, oder direkt an dem Seil befestigt sein, wobei eine Drehbarkeit durch ein Verdrillen des Seiles erzielbar sein kann.

Das bügelförmige Halteglied kann symmetrisch ausgebildet sein. An zwei gegenüberliegenden Endabschnitten des bügelförmigen Halteglieds kann jeweils ein Drehgelenk angeordnet sein. Die beiden Drehgelenke liegen auf einer gemeinsamen Drehachse. An den beiden Drehgelenken ist ein Verbindungsglied in Form eines Ringkörpers gelagert . Der Ringkörper kann einen Außenring eines Lagers, insbesondere Wälzlagers oder Gleitlagers bilden. Der Ringkörper kann auch als separates Bauteil ausgebildet sein, das mit einem Außenring eines Lagers, insbesondere Wälzlagers oder Gleitlagers verbunden ist. Das Lager bzw. dessen Innenring kann demgemäß fest mit dem Endeffektor-Flansch verbunden sein. Insoweit ist der Ringkörper drehbar an dem Endeffektor-Flansch gelagert.

Durch die Gelenkkoppel und das Seil wird eine Gelenkkoppel mit drei rotatorischen Freiheitsgraden geschaffen, über die der Endeffektor-Flansch des Roboters mit der Schwerkraft-Kompensationsvorrichtung verbunden ist.

Schwerkraft-Kompensationsvorrichtungen, die unter Anderem auch als Balancersysteme bezeichnet werden, werden im Allgemeinen für den manuellen Einsatz genutzt, um es dem Menschen zu ermöglichen schwere Gegenstände mit einem geringen Kraftaufwand in eine neue Position zu bewegen.

Eine Mechanik des Balancersystems ermöglicht es hierbei Kraft in senkrechter Richtung auf einen Gegenstand auszuüben und ihn damit anzuheben. Der Benutzer bestimmt hierbei die Höhe, in die der Gegenstand gehoben wird. Ein seitliches Verschieben des Gegenstands kann manuell vom Benutzer bewirkt werden. Die Mechanik des Balancers kann ausgebildet sein, ein solches seitliches Verschieben zu ermöglichen.

Die Mechanik das Balancers kann über eine weitere Mechanik, die auch als Lastkörperhaltemittel bzw. im Weiteren auch als Gegenstandhalter bezeichnet wird, mit dem zu hebenden Gegenstand verbunden werden. Dieser Gegenstandhalter kann über weitere, insbesondere auch aktive Freiheitsgrade verfügen, die vom Benutzer angesteuert werden können. So kann das Lastkörperhaltemittel beispielsweise als ein Greifer ausgebildet sein, welcher zwischen einer Offenstellung und einer den Lastkörper greifenden Schließstellung verstellbar ist.

Derartige Balancersysteme können auch von Robotern genutzt werden. Der Roboter bewegt hierbei den Gegenstand aktiv, beispielsweise in der Ebene und die Gewichtskraft des zu hebenden Gegenstands wird zum Teil oder vollständig vom Balancer aufgehoben. Die Bewegungen des Balancers in der Vertikalen werden dabei vom Roboter ausgelöst bzw. bewirkt. Der Gesamtaufbau des Systems, das den Balancer und den Gegenstandhalter umfasst, kann hierbei identisch zu einem manuell genutzten Balancersystem ausgebildet sein. Der Gegenstandhalter greift am zu hebenden Gegenstand an und der Roboter am Gegenstand, oder am Gegenstandhalter.

Durch eine Unterstützung eines Roboters mit einem Balancersystem kann der Roboter Gegenstände zumindest mit reduzierter Dynamik bewegen, für deren Gewichtskraft der Roboter eigentlich nicht ausgelegt ist. Diese Gegenstände sollen vom Roboter, mit der Unterstützung durch den Balancer, in eine neue Position in einer Umgebung mit Störkonturen gebracht werden. Problematisch für den Einsatz eines solchen Balancersystems in Verbindung mit einem Roboter ist die große Störkontur eines Gegenstandhalters, der an das Balancersystem, d.h. an die Schwerkraft-Kompensationsvorrichtung angepasst ist. Dies hat zur Folge, dass das Gesamtsystem aus Balancer und Gegenstandhalter für jeden Einsatz neu zu konzipieren wäre, um die Störkonturen an einem Ort zu platzieren, der für die jeweilige Aufgabe unproblematisch ist.

Hier setzt nun die Erfindung an, wobei es Ziel ist, ein automatisiertes Handhabungssystem zu konzipieren, bei dem die normalen Bewegungen des Roboters durch eine Schwerkraft-Kompensationsvorrichtung unterstützt werden, ohne dass der Gegenstandhalter, d.h. das Lastkörperhaltemittel mit Rücksicht auf die Schwerkraft-Kompensationsvorrichtung zu gestalten wäre, sondern das Lastkörperhaltemittel dem handhabenden Roboter und der Aufgabenstellung, insbesondere einer Montageaufgabenstellung gemäß ausgebildet werden kann. Im Ergebnis können große Störkonturen vermieden werden. Mit einem solchen Balancersystem können dann möglichst viele der Standardaufgaben vom Roboter unterstützt werden, ohne dass jeweils eine Anpassung erfolgen muss.

Ein Körper, d.h. ein Lastkörper kann von dem Roboter im Raum in sechs Freiheitsgraden bewegt werden. Der Balancer soll die Bewegungsmöglichkeiten nicht einschränken und er soll die gesamte, oder einen Teil der Gewichtskraft des Lastkörpers aufnehmen. Weiterhin soll der Balancer und/oder das Lastkörperhaltemittel möglichst wenige Störkonturen aufweisen, die zu Kollisionsproblemen in der Arbeitsumgebung führen können.

Die Funktionen, die das Gesamtsystem zu erfüllen hat, werden in einer Ausführung der Erfindung in Teilfunktionen aufgeteilt und Teilsystemen zugeordnet. Der Balancer kann dabei eine Bewegung in einer Ebene ermöglichen. Der Hebemechanismus ermöglicht das Anheben des Gegenstands. Diese Funktion kann auch mit in den Balancer mit integriert werden, je nach Mechanik des Balancers. Der Gegenstandhalter kann mit dem zu hebenden Gegenstand verbunden sein und das Drehen dieses Gegenstands um einzelne oder um alle Raumachsen ermöglichen.

Die Drehbewegungen des Gegenstands werden in einer Ausführungsform vom Flansch des Roboters ermöglicht. Die senkrechte Kraft des Balancers wird dabei direkt in den Flansch des Roboters eingeleitet, wodurch Glieder und/oder angetriebene Gelenke des Roboters entlastet werden können. Die Mechanik mit der die Kraft auf den Flansch übertragen wird, schränkt die Bewegungen des Roboters nur geringfügig ein. Die Mechanik mit der die Kraft auf den Flansch übertragen wird, bildet nur eine kleine Störkontur, insbesondere um eine Drehachse des Roboters.

Der Flansch des Roboters kann um eine kleine Länge, beispielsweise um 15 mm, verlängert werden. Zwischen dem Flansch des Roboter und dem zu hebenden Gegenstand und um den Gegenstand wird keine zusätzliche Störkontur generiert.

Die Kraftübertragung auf den Flansch erfolgt in einer beispielhaften Ausführungsform mit einer Aufhängung, die drei passive Freiheitsgrade aufweist. Die Aufhängung ist über ein erstes Lager mit dem Flansch des Roboters verbunden, in dem sich der Flansch frei drehen kann. Die Aufnahme des Außenrings des Lagers wird von einem Ring gehalten, mit dem es über ein zweites Lager gelenkig verbunden ist. Der Ring wird weiterhin von oben gehalten. Diese Verbindung kann sich senkrecht um sich selbst, d.h. um eine Achse drehen, die insoweit ein drittes Lager bildet. Über diese Verbindung wird die Kraft auf die Aufhängung aufgebracht, die senkrecht nach oben und/oder in diejenige Richtung, in der sich die Schwerkraft-Kompensationsvorrichtung befindet, zieht. Der Ring der Aufhängung hat einen so großen Innendurchmesser, dass das zumindest ein in der kinematischen Kette vorgelagertes Glied des Roboters ohne mit dem Ring zu kollidieren in diesen eindringen kann.

Die Winkelstellung der Aufhängung ist immer eindeutig, solange der Winkel zwischen der ersten Drehachse und der Haltekraftrichtung des Balancers ungleich null ist. Die Aufhängung hat die Eigenschaft, dass solange der Winkel ungleich null ist, die Kraft auf die Aufhängung immer senkrecht durch den Schnittpunkt der drei Drehachsen der Aufhängung verläuft, der sich im Zentrum des Flansches befindet. Die Kraft geht auch dann durch den Schnittpunkt, wenn der Winkel gleich Null ist. Allerdings ist dann die Position des Gelenks am Flansch nicht mehr eindeutig.

Ist der Flansch des Roboters senkrecht zur Haltekraftrichtung ausgerichtet, sind die erste und dritte Drehachse der Aufhängung koaxial zueinander und können sich daher frei zueinander drehen. Weiterhin verfügt die Aufhängung in dieser Stellung über kein separates Gelenk, das eine Drehung des vorletzten Rollgelenks des Roboters ermöglicht. Stattdessen kann sich die Kraftübertragung auf den Ring am Aufhängungspunkt drehen und ermöglicht dem Roboter damit die Bewegung.

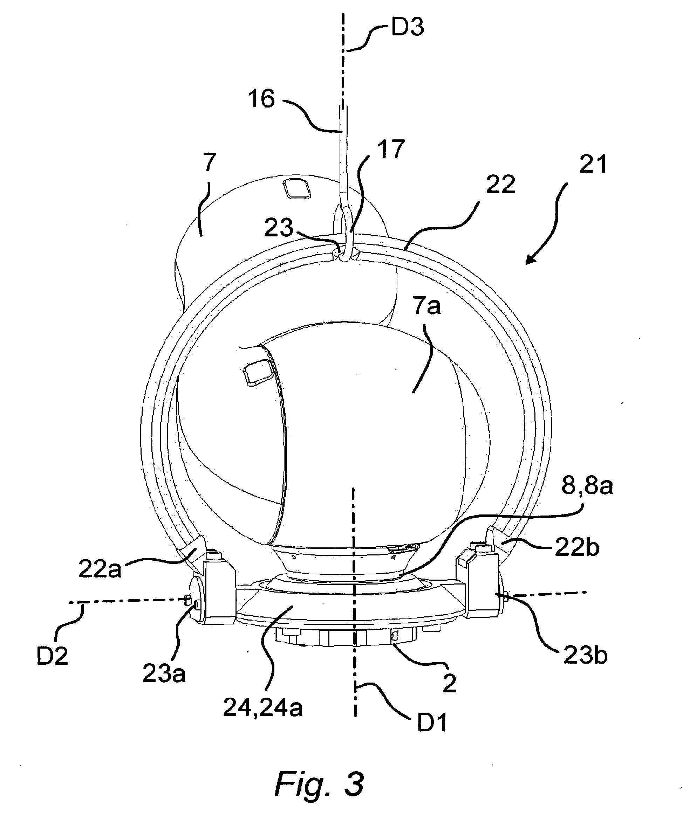

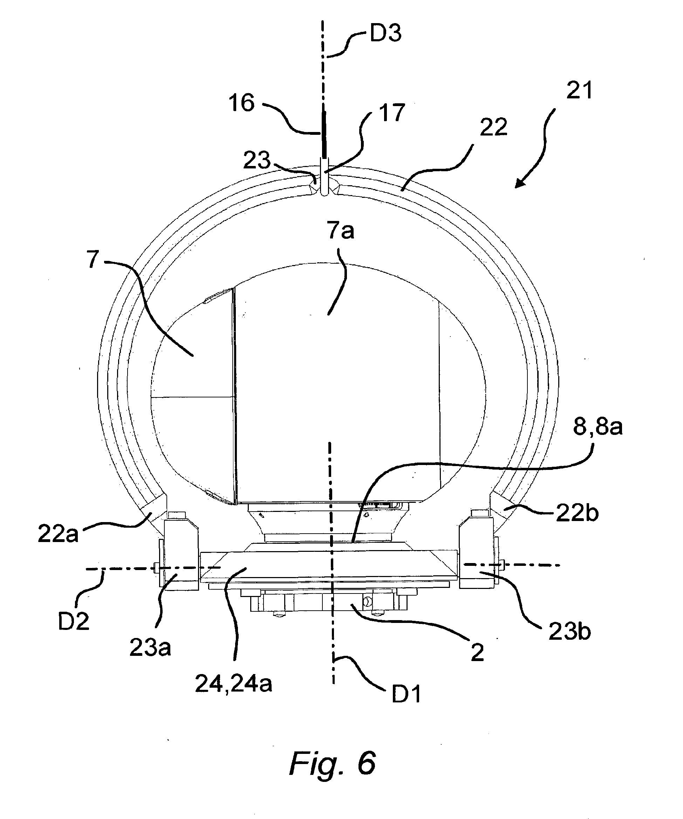

Um sicherzustellen, dass die Winkelpositionen der Aufhängung eindeutig sind, wenn der Flansch aus der Position herausgefahren wird, in welcher der Flansch senkrecht zur Haltekraftrichtung ausgerichtet ist, muss die Bewegung des Roboters eine Bedingung erfüllen. Zuerst muss der Flansch des Roboters nach vorne geneigt werden, so dass sich ein positiver Winkel ergibt, der beispielsweise in Fig. 3 und Fig. 6 aus der Zeichnungsebene hinausschwenken kann. Dies stellt sicher, dass die Winkelpositionen der Aufhängung eindeutig sind.

In einer Ausprägung des Systems aus Balancer und Hebemechanismus kann der Hebemechanismus aus einem Seilzug bestehen, der starr an einer Decke über einem Arbeitspunkt des Roboters angebracht ist. Die Kraft auf die Aufhängung des Roboters verläuft dabei nicht mehr senkrecht nach oben, wenn sich der Roboterflansch vom Arbeitspunkt weg bewegt. Die Decke befindet sich ausreichend weit über dem Arbeitspunkt des Roboters, so dass der Roboter mit den seitlichen Kräften umgehen kann, wenn der Roboter seinen Flansch seitlich vom Arbeitspunkt weg bewegt.

In einer alternativen Ausprägung des Systems aus Balancer und Hebemechanismus kann der Hebemechanismus aus einem Seilzug bestehen, der über eine Linearführung an der Decke angebracht ist. Der Roboter nutzt in seinen Arbeitsraum zwei Punkte an denen er eine unterstützende Kraft benötigt, die senkrecht von oben aufgebracht wird, oder mehrere Punkte, die zumindest ungefähr auf einer Geraden liegen. Zwischen den beiden Arbeitspunkten wird die Linearführung so an der Decke angebracht, dass sich die Enden jeweils über einem Arbeitspunkt befinden. Weiterhin kann die Linearführung über Bremsen und/oder Dämpfungen an den Endpunkten verfügen, in denen ein Führungsschlitten direkt über ihren Arbeitspunkten anhalten können, wenn sie mit einer bestimmten Dynamik in diese Stellungen gezogen werden.

Ein Ausführungsbeispiel der Erfindung ist exemplarisch in den beigefügten schematischen Figuren dargestellt.

Es zeigen:
- Fig. 1: eine schematische, perspektivische Darstellung eines automatisierten Handhabungssystems mit einer Schwerkraft-Kompensationsvorrichtung, einem Lastkörper und einem Roboter,
- Fig. 2: eine erste perspektivische Teilansicht des Roboters im Bereich seines Flansches mit einer Ausführungsform einer erfindungsgemäßen Gelenkkoppel,
- Fig. 3: eine zweite perspektivische Teilansicht des Roboters im Bereich des Flansches mit der Gelenkkoppel gemäß Fig. 1,
- Fig. 4: eine erste Seitenansicht des Roboters im Bereich des Flansches mit der Gelenkkoppel gemäß Fig. 1,
- Fig. 5: eine zweite Seitenansicht des Roboters im Bereich des Flansches mit der Gelenkkoppel gemäß Fig. 1 und
- Fig. 6: eine Frontansicht des Roboters im Bereich des Flansches mit der Gelenkkoppel gemäß Fig. 1.

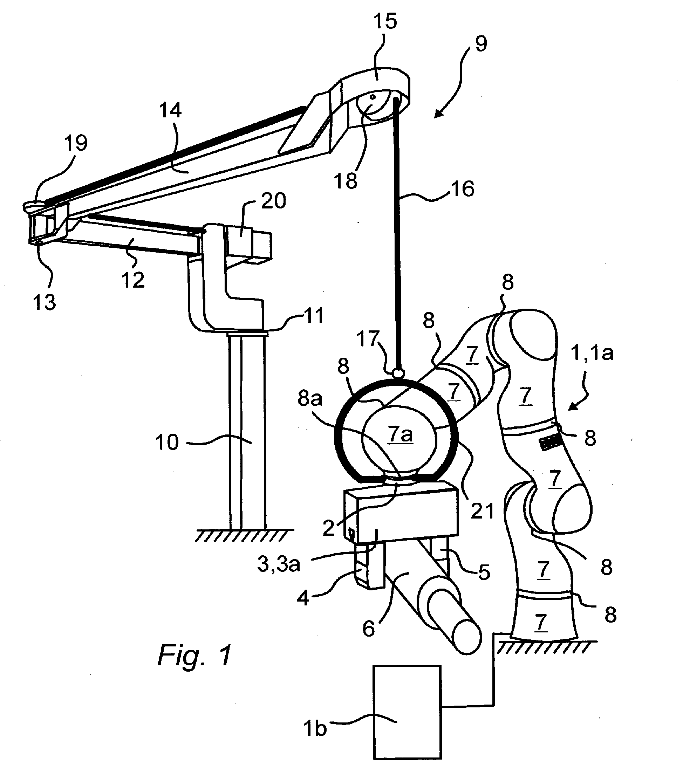

In der Fig. 1 ist ein Roboter 1, insbesondere Industrieroboter dargestellt. Beispielhaft handelt es sich in dem dargestellten erfindungsgemäßen Ausführungsbeispiel um einen Leichtbauroboter des Typs KUKA LBR III. Der Roboter 1 umfasst einen Manipulatorarm 1a und eine Steuervorrichtung 1b. Der Manipulatorarm 1a weist an seinem Endeffektor-Flansch 2 einen Endeffektor 3a, insbesondere in Art eines Greifers auf, der im Folgenden unter Anderem auch als Lastkörperhaltemittel 3 bezeichnet wird. Der Endeffektor 3a kann insoweit speziell auch als Greifer bezeichnet werden. Der dargestellte Endeffektor 3a kann zwei gegeneinander bewegliche Greiferbacken 4 und 5 aufweisen. Zwischen den Greiferbacken 4 und 5 ist ein Lastkörper 6 gehalten. Der Manipulatorarm 1a weist Glieder 7 auf, die durch Gelenke 8 miteinander verbunden sind. Durch Bewegen der Gelenke 8 des Manipulatorarms 1a wird der Endeffektor 3a und folglich der Lastkörper 6 bewegt. Der Lastkörper 6 kann beispielsweise ein Maschinenbauteil sein, das im Rahmen der Herstellung einer Maschine während seiner Montage zu bewegen ist. Die Steuervorrichtung 1b ist zum automatisierten Bewegen des Manipulatorarms 1a eingerichtet.

Erfindungsgemäß wird der Lastkörper 6 nicht von dem Manipulatorarm 1a, sondern von einer separaten Schwerkraft-Kompensationsvorrichtung 9 schwerkraftkompensiert. Die Schwerkraft-Kompensationsvorrichtung 9 kann, wie im gezeigten Ausführungsbeispiel dargestellt, ein fest installierte Standsäule 10 aufweisen. Über ein erstes passives Drehgelenk 11 ist ein Ausleger 12 der Schwerkraft-Kompensationsvorrichtung 9 um eine erste vertikale Achse schwenkbar verdrehbar. An dem Ausleger 12 ist über ein zweites passives Drehgelenk 13 ein Tragarm 14 verbunden. von einem frei auskragenden Ende 15 des Tragarms 14 läuft im Ausführungsbeispiels ein Seil 16 senkrecht nach unten. In einer nicht dargestellten alternativen Ausführung kann statt eines Seiles 16 eine Stange verwendet werden. Ein Stange hat den Vorteil, dass sie während eines passiven Verschiebens des Balancers auch Querkräfte übertragen kann. Das freie Ende des Seils 16 verfügt über ein Anschlussglied 17. Mittels der beiden passiven Drehgelenke 11 und 13 kann das frei auskragende Ende 15 des Tragarms 14 innerhalb einer horizontal ausgerichteten Ebene passiv bewegt werden. Mittels des Seils 16, welches über eine erste Umlenkrolle 18 und eine zweite Umlenkrolle 19 einer Ausgleichsvorrichtung 20 zugeführt ist, kann das Seil 16, bzw. das Anschlussglied 17 in vertikaler Richtung gemäß eines in Schwerkraftrichtung weisenden Seilabschnitts des Seiles 16 abgesenkt und/oder angehoben werden. In Abhängigkeit einer am Anschlussglied 17 angreifenden Schwerkraft, die durch die Masse des Lastkörpers 6 induziert ist, kann die Ausgleichsvorrichtung 20 eingerichtet sein, am Seil 16 eine Zugkraft auszuüben, die der am Anschlussglied 17 angreifenden Schwerkraft, die durch die Masse des Lastkörpers 6 induziert ist, entgegensetzt ist, insbesondere in seiner Größe der Schwerkraft entspricht, so dass der Lastkörper 6 am Seil 16 frei schwebend aufgehängt ist.

Erfindungsgemäß ist der Lastkörper 6 von einem Lastkörperhaltemittel 3 gehalten, das nicht unmittelbar an dem Seil 16 der Schwerkraft-Kompensationsvorrichtung 9 befestigt ist, sondern an dem Endeffektor-Flansch 2 des Roboters 1. Zum Schwerkraftkompensieren des Lastkörpers 6 ist erfindungsgemäß vorgesehen, dass die Schwerkraft-Kompensationsvorrichtung 9 nicht direkt an dem Lastkörper 6 angreift, sondern an einem Glied 7 des Roboters 1 angreift. Dazu ist vorgesehen, dass das Anschlussglied 17 der Schwerkraft-Kompensationsvorrichtung 9 über eine Gelenkkoppel 21 mit einem Glied 7, insbesondere dem Endeffektor-Flansch 2 des Roboters 1 verbunden ist.

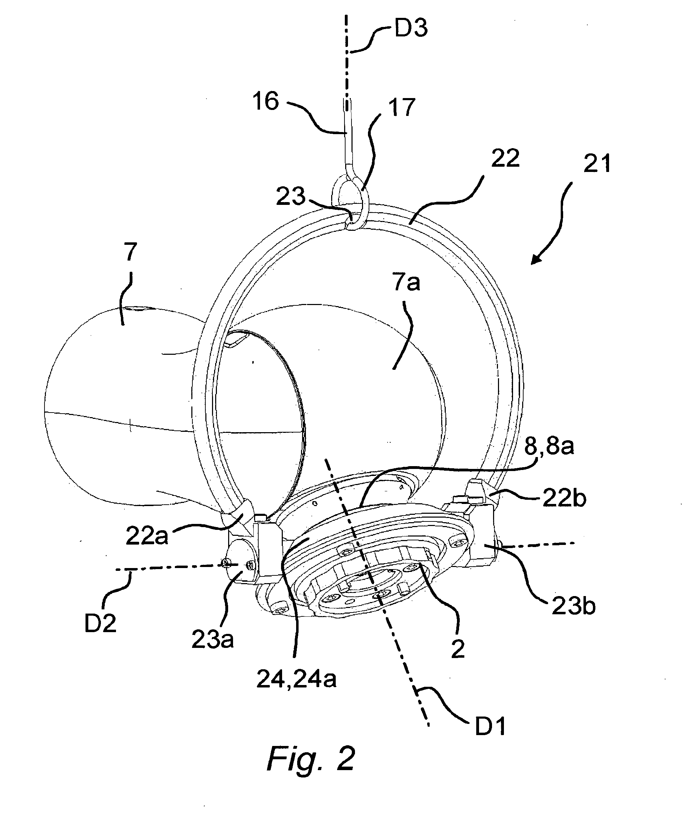

Eine beispielhafte Ausführungsform einer erfindungsgemäßen Gelenkkoppel 21 ist in Fig. 2 näher gezeigt. Die Gelenkkoppel 21 weist ein bügelförmiges Halteglied 22 auf. Das bügelförmiges Halteglied 22 erstreckt sich entlang einer Kreisbahn um einen Winkel von etwa 270 Grad. Der Radius dieser Kreisbahn ist derart groß gewählt, dass ein dem Endeffektor-Flansch 2 nahes Glied 7a vollständig in einen von dem bügelförmigen Halteglied 22 umfangenen Freiraum eintauchen kann. In einem Bereich des oberen Endes weist das bügelförmige Halteglied 22 eine nach innen weisende Kerbe 23 auf, an welcher ein ringförmig ausgebildetes Anschlussglied 17 der Schwerkraft-Kompensationsvorrichtung 9 eingreift. Entweder kann das Anschlussglied 17 mittels einer Drehgelenkverbindung mit dem Seil 16 oder der Stange verbunden sein, oder direkt an dem Seil 16 befestigt sein, wobei eine Drehbarkeit um die Drehachse D3 durch ein Verdrillen des Seiles 16 erzielbar ist.

Das bügelförmige Halteglied 22 ist symmetrisch ausgebildet. An den beiden gegenüberliegenden Endabschnitten 22a, 22b des bügelförmigen Halteglieds 22 ist jeweils ein Drehgelenk 23a, 23b angeordnet. Die beiden Drehgelenke 23a, 23b liegen auf einer gemeinsamen Drehachse D2. An den beiden Drehgelenken 23a, 23b ist ein Verbindungsglied 24 in Form eines Ringkörpers 24a gelagert. Der Ringkörper 24a bildet einen Außenring eines Lagers, insbesondere Wälzlagers oder Gleitlagers. Der Ringkörper 24a kann auch als separates Bauteil ausgebildet sein, das mit einem Außenring eines Lagers, insbesondere Wälzlagers oder Gleitlagers verbunden ist. Das Lager bzw. dessen Innenring ist demgemäß fest mit dem Endeffektor-Flansch 2 verbunden. Insoweit ist der Ringkörper 24a um eine Drehachse D1 drehbar an dem Endeffektor-Flansch 2 gelagert.

Durch die Gelenkkoppel 21 und das Seil 16 wird eine Gelenkkoppel 21 mit drei rotatorischen Freiheitsgraden geschaffen, über die der Endeffektor-Flansch 2 des Roboters 1 mit der Schwerkraft-Kompensationsvorrichtung 9 verbunden ist.

In der Fig. 3 ist der Roboter 1, wie in Fig. 2, im Bereich des Flansches mit der Gelenkkoppel dargestellt. Der Endeffektor-Flansch 2 ist jedoch aus der in Fig. 2 gezeigten Orientierung in eine vertikale Orientierung gedreht dargestellt. In dieser vertikalen Orientierung ist das vordere kugelartige Glied 7a des Manipulatorarms 1a in das bügelförmige Halteglied 22 eingetaucht. Statt einer kreisförmigen Grundform kann das bügelförmige Halteglied 22 auch andere Grundformen aufweisen, beispielsweise auch eine recheckige, quadratische oder dreieckige Grundform. Die Grundform kann jedenfalls so gewählt werden und/oder eine solche Größe aufweisen, dass in Abhängigkeit der Gestalt des vorderen Glieds 7a des Manipulatorarms 1a, das eine von der kugelartigen Gestalt abweichende Gestalt aufweisen kann, sichergestellt ist, dass das Glied 7a in das Halteglied 22 eintauchen kann.

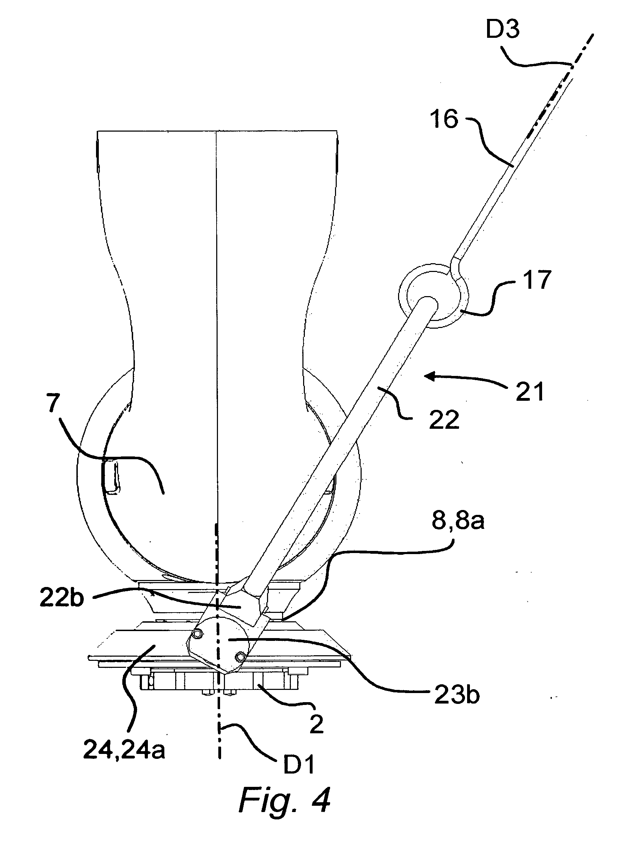

Die Fig. 4 zeigt den Roboter 1 mit dem Endeffektor-Flansch 2, der in eine vertikale Orientierung gedreht ist. Dabei befindet sich jedoch das Seil 16 in einer von der Vertikalen abweichenden Orientierung. Mit anderen Worten steht die Schwerkraft-Kompensationsvorrichtung 9 nicht vertikal über dem Endeffektor-Flansch 2, sondern etwas seitlich versetzt. In einer solchen Anordnung muss der Manipulatorarm 1a eine in horizontaler Richtung wirkende Querkraft aufnehmen, die durch eine Zugkraft entlang des Seils 16 auf den Endeffektor-Flansch 2 einwirkt.

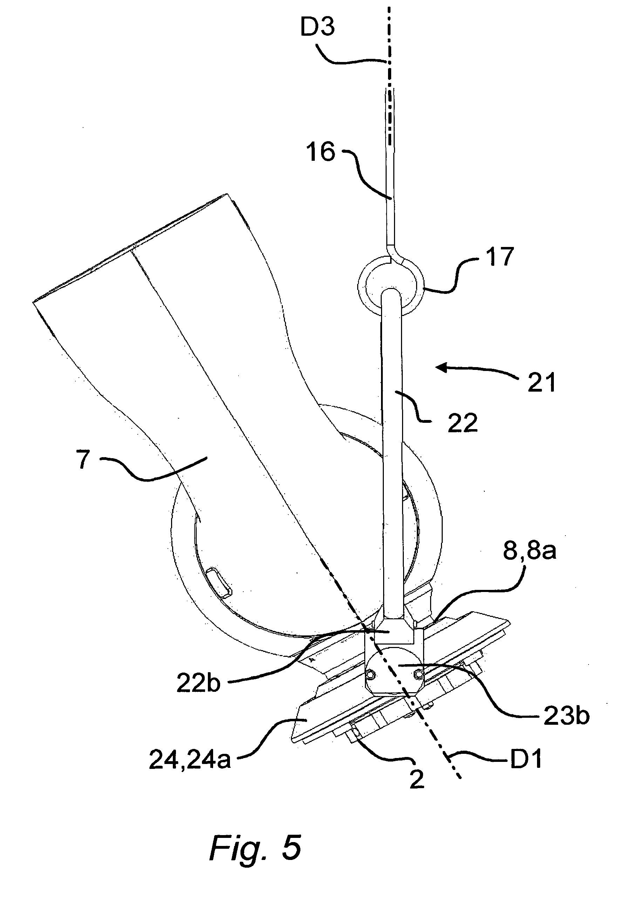

In einer Anordnung, wie in Fig. 5 dargestellt, ist der Manipulatorarm 1a bzw. der Endeffektor-Flansch 2 um einen Winkel aus der Vertikalen heraus gekippt orientiert. Gleichzeitig erstreckt sich das Seil 16 in vertikaler Richtung, so dass keine Querkräfte auf den Endeffektor-Flansch 2 wirken. Allerdings wird ein an dem Endeffektor-Flansch 2 angebrachtes Lastkörperhaltemittel bzw. ein an dem Endeffektor-Flansch 2 angebrachter Lastkörper ein Moment auf den Endeffektor-Flansch 2 aufbringen, das durch den Manipulatorarm 1a aufgenommen werden muss.

Die Fig. 6 zeigt eine weitere Ansicht des Manipulatorarms 1a im Bereich des Endeffektor-Flansches 2 mit der Gelenkkoppel 21. Der Endeffektor-Flansch 2 erstreckt sich in einer horizontalen Ebene, d.h. die Drehachse D1 um die sich der Endeffektor-Flansch 2 dreht, ist vertikal ausgerichtet. Gleichzeitig erstreckt sich das Seil 16 in vertikaler Richtung, so dass keine Querkräfte auf den Endeffektor-Flansch 2 wirken und die aufgrund der Masse eines an dem Endeffektor-Flansch 2 hängenden Lastkörpers induzierte Schwerkraft über die Gelenkkoppel 21 in das Seil 16 eingeleitet werden kann, ohne dass resultierende Kräfte von dem Manipulatorarm 1a aufgenommen werden müssen. In dieser Stellung ist die Winkelposition von Außenring 24 zum Innenring allerdings nicht mehr eindeutig.

## Patentansprüche

1. Automatisiertes Handhabungssystem, aufweisend eine Schwerkraft-Kompensationsvorrichtung (9) für einen Lastkörper (6), die lastseitig mit einem Anschlussglied (17) versehen ist, ein Lastkörperhaltemittel (3) und einen Roboter (1) zum automatisierten Bewegen des schwerkraftkompensierten Lastkörpers (6), welcher Roboter (1) einen Endeffektor-Flansch (2) aufweist, wobei das Anschlussglied (17) der Schwerkraft-Kompensationsvorrichtung (9) mittels einer Gelenkkoppel (21) an einem Roboterglied (7,7a), insbesondere an dem ein distales Roboter-Endglied bildenden Endeffektor-Flansch (2) angeschlossen ist, **dadurch gekennzeichnet, dass** die Gelenkkoppel (21) ein mit dem Roboterglied (7, 7a) drehbar verbundenes Verbindungsglied (24) aufweist, das einen am Roboterglied (7,7a) um eine erste Drehachse (D1) drehbar gelagerten Ringkörper (24a) aufweist, der mittels zweier gegenüberliegender, auf einer gemeinsamen zweiten Drehachse (D2) liegender Drehgelenke (23a, 23b) an einem teilringförmigen und/oder bügelförmigen Halteglied (22) drehbar gelagert ist, das seinerseits um eine dritte Drehachse (D3) drehbar mit dem Anschlussglied (17) der Schwerkraft-Kompensationsvorrichtung (9) angeschlossen ist.

2. Automatisiertes Handhabungssystem nach Anspruch 1, **dadurch gekennzeichnet, dass** das Anschlussglied (17) der Schwerkraft-Kompensationsvorrichtung (9) mittels der Gelenkkoppel (21) an den Endeffektor-Flansch (2) des Roboters angekoppelt ist.

3. Automatisiertes Handhabungssystem nach Anspruch 1 oder 3, **dadurch gekennzeichnet, dass** dasjenige Gelenk (8a) des Roboters (1), welches den Endeffektor-Flansch (2) mit einem dem Endeffektor-Flansch (2) des Roboters (1) in der kinematischen Kette unmittelbar vorausgehendem Glied (7a) verbindet, als Drehgelenk ausgebildet ist.

4. Automatisiertes Handhabungssystem nach einem der Ansprüche 1 bis 3, **dadurch gekennzeichnet, dass** die zwei gegenüberliegenden Drehgelenke (23a, 23b) radial nach außen weisen.

## Claims

1. Automated handling system, comprising a gravity compensation device (9) for a loading body (6), which device is equipped on the loading side with a connecting element (17), a loading body holding means (3) and a robot (1) for automatically moving the gravity-compensated loading body (6), which robot (1) comprises an end effector flange (2), the connecting element (17) of the gravity compensation device (9) being connected by means of a joint coupling (21) to a robot element (7, 7a), in particular connected to the end effector flange (2) forming a distal robot end element, **characterised in that** the joint coupling (21) comprises a connecting element (24) connected rotatably to the robot element (7, 7a), which comprises an annular body (24a) mounted rotatably about a first axis of rotation (D1), which annular body is rotatably mounted by means of two opposite swivel joints (23a, 23b) lying on a common second axis of rotation (D2) on a partly annular and/or bracket-like holding element (22), which in turn is connected rotatably about a third axis of rotation (D3) to the connecting element (17) of the gravity compensation device (9).

2. Automated handling system according to claim 1, **characterised in that** the connecting element (17) of the gravity compensation device (9) is coupled by means of the joint coupling (21) to the end effector flange (2) of the robot.

3. Automated handling system according to either claim 1 or claim 2, **characterised in that** the joint (8a) of the robot (1) which connects the end effector flange (2) to an element (7a) that directly precedes the end effector flange (2) of the robot (1) in the kinematic chain is configured as a swivel joint.

4. Automated handling system according to any one of claims 1 to 3, **characterised in that** the two opposite swivel joints (23a, 23b) point radially outwards.

## Revendications

1. Système de manipulation automatisé, présentant un dispositif de compensation de gravité (9) pour un corps de charge (6), lequel dispositif est pourvu côté charge d'un élément de raccordement (17), un moyen de retenue du corps de charge (3) et un robot (1) pour le déplacement automatisé du corps de charge (6) à gravité compensée, robot (1) qui présente une bride d'effecteur terminal (2), l'élément de raccordement (17) du dispositif de compensation de gravité (9) étant raccordé au moyen d'une bielle (21) à un élément de robot (7, 7a), en particulier à la bride d'effecteur terminal (2) formant un élément terminal distal de robot, **caractérisé en ce que** la bielle (21) présente un élément de liaison (24) relié de manière rotative à l'élément de robot (7, 7a) qui présente un corps annulaire (24a) monté rotatif autour d'un premier axe de rotation (D1) sur l'élément de robot (7, 7a), corps annulaire qui est monté rotatif sur un élément de retenue (22) en forme d'anneau partiel et/ou en forme d'étrier au moyen de deux articulations rotatives (23a, 23b) opposées situées sur un deuxième axe de rotation (D2) commun, lequel élément de retenue (22) est lui-même raccordé de manière rotative avec l'élément de raccordement (17) du dispositif de compensation de gravité (9) autour d'un troisième axe de rotation (D3).

2. Système de manipulation automatisé selon la revendication 1, **caractérisé en ce que** l'élément de raccordement (17) du dispositif de compensation de gravité (9) est accouplé à la bride d'effecteur terminal (2) du robot au moyen de la bielle (21).

3. Système de manipulation automatisé selon la revendication 1 ou 2, **caractérisé en ce que** l'articulation (8a) du robot (1), qui relie la bride d'effecteur terminal (2) avec un élément (7a) directement précédent à la bride d'effecteur terminal (2) du robot (1) dans la chaine cinématique, est réalisé sous forme d'articulation rotative.

4. Système de manipulation automatisé selon l'une des revendications 1 à 3, **caractérisé en ce que** les deux articulations rotatives (23a, 23b) opposées sont tournées radialement vers l'extérieur.
